# EUROPÄISCHE PATENTSCHRIFT

(11) **EP 1 250 748 B1**
(45) Veröffentlichungstag und Bekanntmachung des Hinweises auf die Patenterteilung: **27.12.2006**
(21) Anmeldenummer: 01946989.9
(22) Anmeldetag: 26.01.2001
(51) Int. Cl.: H02K 16/02, H02K 7/116, H02K 23/60, B60K 1/00, B60K 17/04

(54) **ELEKTRISCHER ANTRIEB FÜR EIN FAHRZEUG**
ELECTRIC DRIVE FOR A VEHICLE
DISPOSITIF D'ENTRAINEMENT ELECTRIQUE POUR UN VEHICULE

(30) Priorität: 28.01.2000 AT 133002000
(43) Veröffentlichungstag der Anmeldung: 23.10.2002
(73) Patentinhaber: Wachauer, Oskar, 8795 Hieflau (AT)
(72) Erfinder: Wachauer, Oskar, 8795 Hieflau (AT)
(74) Vertreter: Krause, Peter
(86) Internationale Anmeldenummer: PCT/AT2001/000019
(87) Internationale Veröffentlichungsnummer: WO 2001/056138

(56) Entgegenhaltungen:
- EP-A- 0 867 324
- WO-A-99/36286
- DE-A- 19 905 447
- GB-A- 2 008 862
- JP-A- 50 151 315
- US-A- 1 348 539
- PATENT ABSTRACTS OF JAPAN vol. 001, no. 112 (E-048), 28. September 1977 (1977-09-28) & JP 52 045009 A (EKUTASU SYST KK), 8. April 1977 (1977-04-08)

## Beschreibung

Die Erfindung bezieht sich auf einen elektrischen Antrieb für ein Fahrzeug, insbesondere für ein mehrspuriges Elektromobil, bei dem ein zum Fahrzeugaufbau bzw. zum Fahrzeugrahmen feststehendes Gehäuse vorgesehen ist, wobei in diesem Gehäuse ein Motorgehäuse mit einem Ständer und ein im Motorgehäuse vorgesehener Läufer jeweils drehbar gelagert sind und das Motorgehäuse und der Läufer zur Arbeitsleistung eine gegensinnige Drehbewegung ausführen, wobei ein Antriebsstrang mit dem Läufer bzw. mit dem Motorgehäuse verbunden ist und die Drehbewegung des Läufers bzw. des Motorgehäuses über eine Getriebeeinrichtung mit gleichsinniger An- und Abtriebsdrehrichtung und der andere Antriebsstrang mit dem Motorgehäuse bzw. mit dem Läufer verbunden ist und die Drehbewegung des Motorgehäuses bzw. des Läufers über eine Getriebeeinrichtung mit gegensinniger An- und Abtriebsdrehrichtung übersetzt ist und die Getriebeeinrichtungen Planetengetriebe sind, wobei der Läufer über ein auf der Welle angeordnetes Stirnrad bzw. das Motorgehäuse mit einem mit dem Motorgehäuse verbundenen und auf der Motorgehäuseachse angeordneten Stirnrad mit den Planetenrädern des zugeordneten Planetengetriebes in Eingriff steht.

Ein derartiger elektrischer Antrieb ist aus der US 1 348 539 A bekannt. Bei diesem Antrieb wird jedoch eine Radwelle über ein Stirnrad angetrieben. Nachteilig dabei ist, dass durch die verschiedenen Konstruktionen der linken und der rechten Getriebeseite ungleiche Massen gegeben sind, die zu schwerwiegenden Beeinflussungen der Fahreigenschaften führen können.

Ferner ist aus der JP 50 151315 A ein weiterer Antrieb für ein Fahrzeug bekannt, zu dem sinngemäß die oben gemachten Ausführungen gelten, wobei dieser bekannte Antrieb ein Wechselstrom-Antrieb ohne Frequenzumrichter ist.

Es ist aus der US 516 917 A ein Elektromotor bekannt, der zum drehzahlunabhängigen Antrieb zweier Räder dient, indem ein Rad starr mit der Feldwicklung und das andere Rad über ein Ausgleichsgetriebe mit dem Anker verbunden ist. Um gleiches Drehmoment an beiden Rädern zu erzielen, muss das Ausgleichsgetriebe bei gleicher Drehzahl von Feldwicklung und Anker ausschließlich eine Drehrichtungsumkehr der Ankerdrehung ohne Veränderung der Drehzahl bewirken. Das ist bei den aufgezeigten Varianten, einerseits als Tellerradsatz, ähnlich der Anordnung in bekannten Achsdifferentialen, andererseits als Stirnradplanetengetriebe mit gleicher Funktion der Fall.

Weiters ist aus der US 613 894 A ein Dynamo und Elektromotor für Fahrzeuge bekannt. Bei dieser Anordnung von zwei konzentrisch zueinander drehbaren Elektromotorteilen sind die beiden Teile durch eine Getriebevorrichtung hoher Untersetzung miteinander und mit einem feststehenden Teil verbunden. In einer Ausführungsvariante wird vorgeschlagen, dass das Gehäuse der rotierenden Feldwicklung fest mit einem Antriebsrad eines Fahrzeuges verbunden wird. In einer weiteren Ausführungsvariante soll die innere Welle als Antrieb für eine langsam laufende Maschinen verwendet werden.

Weiters ist eine Vorrichtung mit rotierender Feldwicklung bekannt, wobei der Feldwicklung über Schleifringe Strom zugeführt wird. Der ebenso rotierende Anker treibt über ein Planetengetriebe mit hoher Übersetzung das Gehäuse der Feldwicklung an. Gleich wie bei der US 613 894 A wird diese Vorrichtung vorzugsweise für langsam laufende Maschinen, beispielsweise als Trommelantrieb in Seilwinden, wobei der gesamte Antrieb innerhalb der Trommel Platz findet, eingesetzt.

Es ist auch aus der US 5 845 732 A ein Antriebsstrang für ein Elektrofahrzeug bekannt. Dabei ist eine Antriebsachse mit einem konzentrisch zu den Radwellen angeordnetem Rotor verbunden, wobei der Rotor auf einer Hohlwelle gelagert ist und das Sonnenrad eines Planetetengetriebes antreibt.

Der Steg dieses Getriebes ist mit einer Radwelle verbunden, die durch die Hohlwelle des Rotors geführt wird. Das Hohlrad des Getriebes ist mit dem Steg eines weiteren Planetengetriebes, das konzentrisch zur Rotorwelle angeordnet ist, verbunden. Dieses Getriebe hat eine Drehmomentumkehr zu bewerkstelligen, damit die zweite Radwelle, mit der es verbunden ist, zur ersten Radwelle gleichläufig wird. Nachteilig an dieser Anordnung ist die Notwendigkeit einer Hohlwelle zur Aufnahme des Rotors.

Aus der US 5 487 438 A bzw. der EP 0 587 120 A3 ist ein Antriebssystem für ein Elektrofahrzeug bekannt. Im Zuge dieses Antriebssystems wird ein Achsantrieb aufgezeigt, bei dem die drehbar gelagerte Feldwicklung, die über Schleifringe gespeist wird, mit dem Ritzel einer Getriebevorrichtung verbunden ist. Dieses Ritzel ist mit einem Hohlrad im Eingriff, das wiederum fest mit einer der Radwellen verbunden ist. In dieser Getriebevorrichtung laufen Ritzel und Hohlrad gleichsinnig. Der ebenso drehbar gelagerte Rotor treibt ein Stirnrad an, das mit einem weiteren Stirnrad in Eingriff steht, das mit der anderen Radwelle verbunden ist. Diese Getriebevorrichtung bewirkt gegensinnigen Lauf der Radwelle bezogen auf die Rotordrehung. Die Funktion eines Ausgleichsgetriebes ist somit gegeben. Durch geeignete Wahl der entsprechenden Zahnraddurchmesser können die Radwellen in Flucht gebracht werden. Nachteilig an dieser Ausführung ist, dass die Feldwicklung und der Rotor jedenfalls um eine weitere, zu den Radwellen parallele Achse rotieren, wodurch der Bauaufwand für das Antriebsgehäuse erhöht wird. Weiters ergibt sich bei anzustrebenden hohen Übersetzungen ein großer Durchmesser für das Hohlrad der Getriebevorrichtung, wodurch die Bodenfreiheit eines Fahrzeuges mit einer solchen Achse unzulässig verringert wird.

In der US 5 804 935 A ist ein Antriebssystem für Elektrofahrzeuge beschrieben. Dieses Antriebssystem ist für Fahrzeuge mit zwei angetriebenen Achsen vorgesehen, wobei eine drehbar gelagerte Feldwicklung eine Radachse antreibt. Über geeignete Vorrichtungen kann dieser Antriebsstrang unterbrochen und die Feldwicklung zum Fahrzeug festgelegt werden, während die Antriebsachse frei läuft. Ferner ist ein Rotor vorgesehen, der die andere Antriebsachse antreibt. Die Stromzufuhr zur rotierenden Feldwicklung erfolgt über Schleifringe. Die Übertragung der Drehbewegung von Rotor bzw. Feldwicklung erfolgt direkt auf die Verbindungswellen zu den Antriebsachsen. Unter der Voraussetzung, dass der Rotor gleiche Drehzahl bezogen auf den Stator aufweist, kann mit Hilfe dieser beschriebenen Vorrichtung bei feststehendem Rotor und Antrieb nur einer Radachse doppelte Fahrgeschwindigkeit gegenüber dem Antrieb beider Achsen erreicht werden. Neben der Eignung einer solchen Antriebsvorrichtung ausschließlich für Fahrzeuge mit zwei angetriebenen Radachsen, ist darüber hinaus für jede Radachse ein Reduktionsgetriebe vorzusehen, um eine sinnvolle konstruktive Ausgestaltung zu erzielen.

Aus der GB 2 008 862 A ist ein Doppelrotor mit Reibungsbremsen bekannt. Es wird eine Vorrichtung beschrieben, bei der sowohl Feldwicklung als auch Anker unabhängig voneinander auf gemeinsamer Achse drehbar gelagert und durch Reibungsbremsen feststellbar sind. Die Stromübertragung erfolgt über Schleifringe. Die Drehbewegungen von Rotor und Feldwicklung werden in einer geeigneten Planetengetriebevorrichtung überlagert. Nachgeschaltet dieser Vorrichtung ist ein Reduktionsgetriebe zum Antrieb vornehmlich einer Seiltrommel. Durch gegenseitiges Festbremsen von Rotor oder Feldwicklungen können stark unterschiedliche Drehzahlen der Seiltrommel erzielt werden, womit die Handhabung eines entsprechenden Hubwerkes oder einer Arbeitsmaschine mit vergleichbaren Anforderungen verbessert wird. Weiters ist aus der GB 2 254 965 A ein Getriebesystem für elektrisch angetriebene Fahrzeuge bekannt. Es wird eine Vorrichtung vorgeschlagen, bei der sowohl Anker als auch Feldwicklung einer Gleichstrommaschine auf gemeinsamer Achse drehbar gelagert sind. Dabei ist die Rotorwelle an einem Ende am Fahrzeug drehbar gelagert und das andere Ende im rotierenden Gehäuse der Feldwicklung. Das rotierende Gehäuse der Feldwicklung besitzt an einem Ende einen Wellenstummel, der am Fahrzeug gelagert ist. Am anderen Ende ist das Gehäuse auf der Rotorwelle gelagert. Der Betriebsstrom wird über Schleifringe, die am Außendurchmesser des Gehäuses der Feldwicklung angebracht sind, übertragen. Der Rotor weist einen Kollektor auf, der über rotierende, mit dem Gehäuse verbundene, Bürsten versorgt wird.
In der US 4 130 172 A ist ein Elektrofahrzeug beschrieben. In dieser Veröffentlichung ist ein Fahrzeugantrieb mit Elektromotor dargestellt, bei dem Rotor und Feldwicklung auf einer gemeinsamen Achse drehbar zueinander angeordnet sind, wobei die Drehrichtung der einen Abtriebswelle bezüglich der Rotorbewegung durch ein Kegelradgetriebe umgekehrt wird. Die andere Abtriebswelle ist starr mit der Rotation der Feldwicklung verbunden. Da die beschriebene Anordnung keine Drehzahlreduktion der Abtriebswellen bezüglich Rotor und Feldwicklung durchführt, müssen die Antriebsräder des Fahrzeuges über je einen Riementrieb mit den jeweiligen Abtriebswellen verbunden werden.

Aus der WO 99 36286 A bzw. der AT 405 924 B ist ein elektrischer Antrieb für Fahrzeuge bekannt. In dieser Druckschrift wird aufgezeigt, dass die gegenläufige Bewegung von Rotor und Feldwicklung durch geeignete Planetengetriebevorrichtungen nach Bedarf entweder gleichläufig oder gegenläufig auf Raddrehzahl reduziert werden können, so dass die Funktion eines Achsantriebes mit Differentialfunktion erfüllt ist. Durch die erwähnten Getriebevorrichtungen können Rotor, Feldwicklung und Radwellen auf einer Drehachse angeordnet werden.

Es ist auch ein Achsantrieb für ein Fahrzeug bekannt, bei dem Anker und Feldwicklung drehbar gelagert sind und je ein Rad antreiben. Sowohl der Haupt- als auch der Erregerstrom werden über entsprechend angeordnete Schleifring-Übertragungsvorrichtungen den beweglichen Motorteilen zugeführt. Die notwendige Reduktion auf die Drehzahl der Antriebsräder erfolgt für den Anker und das Feld jeweils durch ein zweistufiges Stirnradgetriebe. In eines dieser Getriebe ist ein Zwischenrad eingefügt, wodurch gegensinnige Drehung von An- und Abtrieb in diesem Strang erreicht wird. Durch geeignete Wahl der Stirnräder dieser Getriebevorrichtungen kann erreicht werden, dass die Radwellen mit der Baueinheit aus Anker und Feldwicklung auf einer gemeinsamen Achse liegen.

Weiters ist aus der EP 0 867 324 A2 ein Fahrzeug, insbesondere ein Gabelstapler, bekannt, der durch einen Elektromotor mit gegenläufig rotierendem Stator und Rotor betreibbar ist. In dieser Druckschrift wird eine Vorrichtung zum Achsantrieb von Flurförderzeugen dargestellt, in dem das eine Rad vom rotierenden Stator über ein Reduktionsgetriebe und das andere Rad vom Rotor über ein Stirnradgetriebe zur Drehrichtungsumkehr sowie über ein weiteres Reduktionsgetriebe, angetrieben wird. Durch die funktionelle Trennung von Drehzahlumkehr und Reduktion auf Raddrehzahl wird der Bauaufwand von zwei getrennten Reduktionsgetrieben zusätzlich zum Wendegetriebe notwendig.

Ferner ist auch aus der US 3 267 311 A eine Kombination von Elektromotor und Differential-Antrieb für ein Fahrzeug bekannt. Der Achsantrieb für das Fahrzeug besteht aus einer rotierenden Feldwicklung, die mit dem einen Rad fest verbunden ist sowie einem um dieselbe Achse rotierenden Anker, der über eine Getriebevorrichtung mit dem anderen Rad verbunden ist. Die Getriebevorrichtung besteht aus einem mit dem Rotor verbundenen Stirnrad, in das Zwischenräder eingreifen. Die Drehachsen der Zwischenräder stehen zum Gehäuse fest und greifen wiederum in ein Hohlrad ein, das konzentrisch zur Rotorachse angeordnet ist. Es wird durch diese Getriebevorrichtung eine Drehrichtungsumkehr zwischen Rotor und Radwelle erzielt. Da dieses Getriebe auch eine nicht vernachlässigbare Drehzahlreduktion vornimmt, sind folglich die Drehmomente an linkem und rechtem Rad zwangsläufig verschieden. Aus diesem Grund sowie wegen der geringen Drehzahlreduktion zwischen elektromotorischen Komponenten und Antriebsrädern, ist die Eignung dieser Kombination für Fahrantriebe in Frage gestellt.

Abschließend ist aus der DE 199 05 447 A ein stufenloses Getriebe mit einer Leistungsverzweigung bekannt.

Der vorliegenden Erfindung liegt die Aufgabe zugrunde, einen elektrischen Antrieb zu schaffen, der einerseits die Nachteile der oben aufgezeigten Antriebe vermeidet und der anderseits einfach im Aufbau ist. Ferner ist es Aufgabe der Erfindung schwerwiegende Beeinflussungen der Fahreigenschaften, beispielsweise auf Grund ungleicher Massen zu vermeiden.

Diese Aufgabe wird durch die Erfindung gelöst.

Der erfindungsgemäße elektrische Antrieb ist dadurch gekennzeichnet, dass Stege, die mit den Achsen der Planetenräder jedes Planetengetriebes verbunden sind, vorgesehen sind, die jeweils die zugeordnete Radwelle antreiben, wobei mindestens ein Planetengetriebe zwischen den Planetenrädern und dem Stirnrad Zwischenräder, die mit dem Planetenrädern und dem Stirnrad kämmen, aufweist. Durch die erfindungsgemäße Ausbildung wird erreicht, dass ein Antrieb konzipierbar ist, der zwischen dem linken und rechten Antriebsrad angeordnet ist, die Differentialfunktion erfüllt und dabei einen so geringen Bauraum beansprucht, dass eine starre, koaxiale Verbindung zwischen Radachsen und Antrieb möglich ist, ohne die Bodenfreiheit des Fahrzeuges unzulässig zu verringern.

Ein weiterer bedeutender Vorteil des erfindungsgemäßen Antriebssystems ist darin gelegen, dass bei einer Geradeausfahrt des Fahrzeuges die Rotordrehzahl etwa der Statordrehzahl entspricht. Für die Leistungsentfaltung ist ja bekanntlich die Summe der Drehzahlen maßgebend. Hingegen ist für die Geräuschentwicklung die maximal im System auftretende Drehzahl verantwortlich. Durch das erfindungsgemäße Antriebssystem wird also die Leistung und damit das Leistungsgewicht der doppelten Drehzahl mit einer Geräuschentwicklung der einfachen Drehzahl erreicht, so dass ein gravierender Systemvorteil gegeben ist.

Der sich durch die Erfindung ergebende überraschende Vorteil ist vor allem darin zu sehen, dass für einen elektrischen Antrieb eine hohe Übersetzung in einer Getriebestufe erreicht wird. Eine derartig hohe Übersetzung ist normalerweise nach dem Stand der Technik nur mit einem dreistufigen Stirnradgetriebe möglich. Weiters ist mit der Erfindung der Vorteil gegeben, dass eine gleichmäßige Momentenaufteilung auf beide Radwellen ermöglicht wird. Ferner ist durch das rückkehrende Getriebe, das heißt An- und Abtrieb sind koaxial, eine kompakte Bauweise des Antriebes möglich. Bei einem derartigen Getriebe wird das Drehmoment über mehrere Planeten-Radsätze pro Getriebe übertragen. Durch die sich daraus ergebende optimale Leistungsverzweigung ist die kompakte Bauweise erreichbar.

Ein weiterer Vorteil der Erfindung ist darin zu sehen, dass durch die Verbindung des Steges mit den Radwellen niedrige Umfangsgeschwindigkeiten der Planetenräder gegeben sind und damit geringe Fliehkräfte auftreten.

Mit diesem erfindungsgemäßen Antrieb ist auch keine Hohlwelle durch den Rotor mit einer aufwendigen Lagerung notwendig, um die gegenüberliegende Radwelle zu betreiben.

Durch die Ausbildung des elektrischen Antriebes sind auch hohe Rotor- und Statordrehzahlen zu erreichen, so dass eine hohe Leistungsdichte erzielt wird.

Vorteilhaft kann es sein, dass beide Planetengetriebe ein gemeinsames, feststehendes Gehäuse aufweisen, da es möglich ist, das gesamte Getriebe mit dem Baudurchmesser des Motorgehäuses auszuführen. Dadurch ergeben sich fertigungstechnisch günstige Einbaumaße, die wiederum auf das Konzept des Fahrzeuges betrachtet, eine gute bzw. eine große Bodenfreiheit garantieren.

Dadurch, dass jedes Planetengetriebe ein im Gehäuse angeordnetes Hohlrad aufweist, in das die Planetenräder eingreifen, ist es möglich, eine einfache Konstruktion zu gewährleisten, die eine wirtschaftliche Fertigung des gesamten Antriebssystems zulässt.

Nach einer anderen Ausführungsvariante der Erfindung sind die Planetenräder und/oder die Zwischenräder mindestens eines Planetengetriebes als Stufenräder ausgeführt. So können Übersetzungen erzielt werden, die den gewünschten Anforderungen optimal entsprechen.

Die Erfindung wird im nachfolgenden anhand der in den Zeichnungen dargestellten Ausführungsbeispiele näher erläutert.

Es zeigen:
Fig. 1 eine schematische Darstellung des Antriebes,
Fig. 2 eine schematische Darstellung des Antriebes bei dem die Planetenräder als Stufenräder ausgebildet sind,
Fig. 3 einen elektrischen Antrieb im Schnitt und
Fig. 4 eine weitere Ausführungsart eines elektrischen Antriebes im Schnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

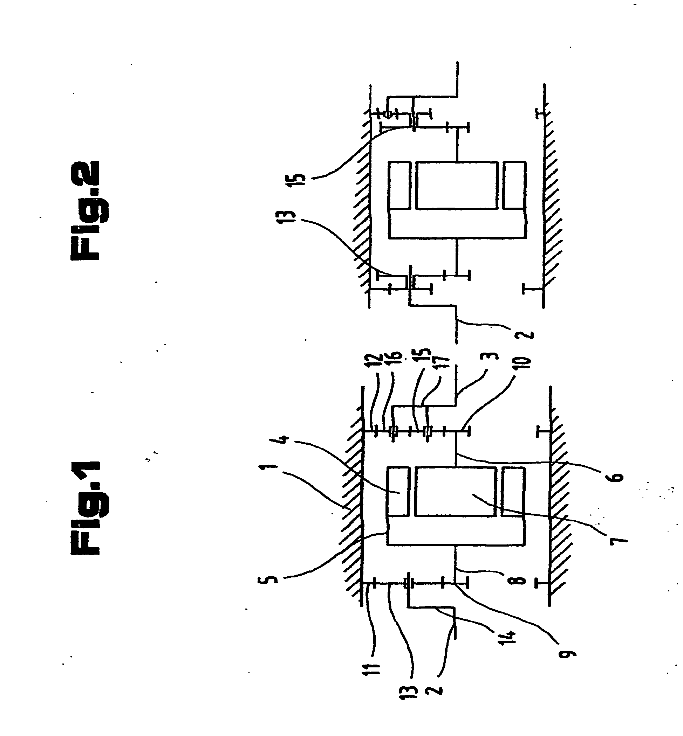

Gemäß der Fig. 1 besteht der elektrische Antrieb aus einem in Bezug zum Fahrzeug feststehendem Gehäuse 1 aus dem beidseitig ein erster Antriebsstrang 2 und ein zweiter Antriebsstrang 3 herausgeführt sind. Das Drehmoment für den ersten Antriebsstrang 2 wird aufgebracht vom einen Ständer 4, der in einem Motorgehäuse 5 befestigt ist und das Drehmoment für den zweiten Antriebsstrang 3 wird aufgebracht von einer Welle 6 eines frei drehbar gelagerten Läufers 7. Das Motorgehäuse 5 ist fest verbunden mit einem Wellenstummel 8 des ersten Antriebsstranges 2, wobei der Wellenstummel 8 an seinem freien Ende ein Stirnrad 9 aufweist. Ebenso weist die Welle 6 an ihrem freien Ende ein Stirnrad 10 auf. Zwischen den Antriebssträngen 2, 3 und den Stirnrädern 9, 10 ist jeweils eine Getriebeeinrichtung, die als Planetengetriebe ausgeführt ist, vorgesehen.

Im feststehendem Gehäuse 1, in dem der gesamte Antrieb integriert ist, ist für jedes Planetengetriebe ein Hohlrad 11, 12 angeordnet. Diese Hohlräder 11, 12 könnten auch als Sonnenräder bezeichnet werden, da deren Achsen in der Hauptachse des Antriebes liegen. In der dem Antriebsstrang 2 zugeordneten Getriebevorrichtung stehen Planetenräder 13 mit dem Hohlrad 11 und dem Stirnrad 9 in Eingriff. Mit den Achsen der Planetenräder 13 ist ein Steg 14 verbunden, der den Antriebsstrang 2 und in weiterer Folge die zugeordnete Radwelle, antreibt.

Um für einen Antrieb, der für ein Fahrzeug dienen soll, eine Drehrichtungsumkehr zu erreichen, werden in der dem Antriebsstrang 3 zugeordneten Getriebeeinrichtung, die ebenfalls als Planetengetriebe ausgeführt ist, Zwischenräder 15 angeordnet, die einerseits mit dem Stirnrad 10 und anderseits mit Planetenrädern 16 kämmen, wobei die Planetenräder 16 mit dem Hohlrad 12 in Eingriff stehen. Die Achsen der Zwischenräder 15 und die Achsen der Planetenräder 16 werden von einem Steg 17 getragen, der den Antriebsstrang 3 und in weiterer Folge die zugeordnete Radwelle, antreibt. Natürlich könnte auch das dem Antriebsstrang 2 zugeordnete Planetengetriebe die Zwischenräder 15 und das dem Antriebsstrang 3 zugeordnete Planetengetriebe direkt mit dem Hohlrad 12 und dem Stirnrad 10 kämmende Planetenräder 16 aufweisen.

Gemäß der Fig. 2 ist schematisch eine Getriebeeinrichtung für einen Antrieb dargestellt, wobei der prinzipielle Aufbau des Antriebes dem Antrieb gemäß Fig. 1 entspricht. Bei diesem Antrieb weist das dem Antriebsstrang 2 zugeordnete Planetengetriebe Planetenräder 13 auf, die als Stufenräder ausgeführt sind. Ebenso sind die Zwischenräder 15 der korrespondierenden Getriebeeinrichtung ebenfalls als Stufenräder ausgebildet. Mit einer derartigen Getriebeausführung kann eine Erhöhung des Übersetzungsverhältnisses erzielt werden.

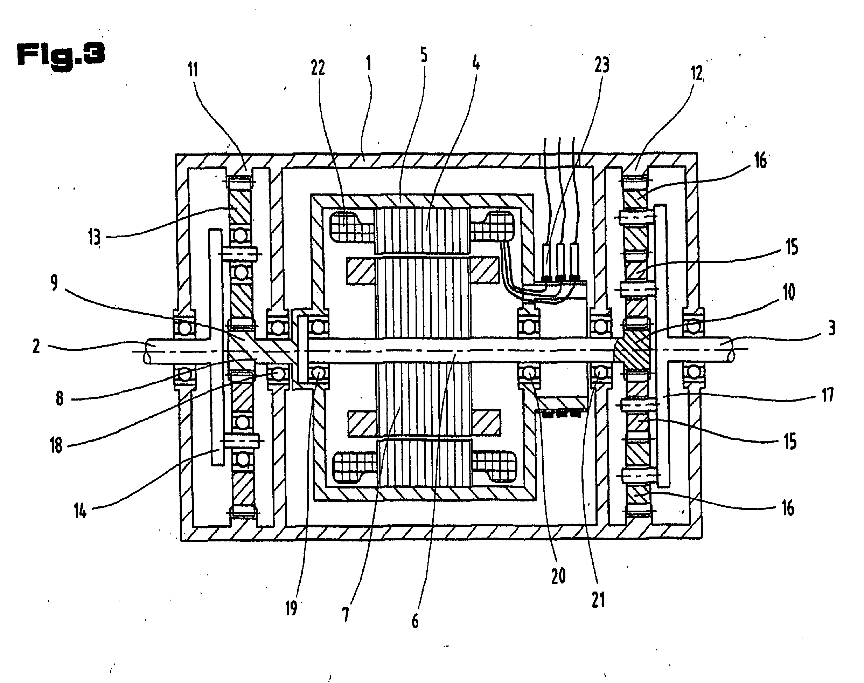

Gemäß der Fig. 3 weist der elektrische Antrieb ein feststehendes Gehäuse 1 auf, in dem mittels Wälzlager 18 das frei drehbare Motorgehäuse 5, in dem der Ständer 4 des Elektromotors befestigt ist, über den Wellenstummel 8 gelagert ist. Der mit dem Motorgehäuse 5 fest verbundene Wellenstummel 8 weist das Stirnrad 9 auf. Im Motorgehäuse 5 ist der Läufer 7 mit seiner Welle 6 über Lager 19 bzw. 20 gelagert. Am einen Ende der Welle 6 ist das Stirnrad 10 vorgesehen. Die Welle 6 kann über weitere Wälzlager 21 noch im feststehenden Gehäuse 1 gelagert sein.

Die Feldwicklung 22 ist im drehbar gelagerten Gehäuse 1 angeordnet. Mit dem Gehäuse 1 ebenso verbunden ist eine Anzahl von Schleifkontakten 23, über die die Feldwicklung 22 mit elektrischer Energie versorgt wird. Das Stirnrad 9 steht mit dem dem Antriebsstrang 2 zugeordneten Planetengetriebe im Eingriff. Dieses Planetengetriebe besteht aus einem, mit dem Gehäuse 1 fest verbundenem Hohlrad 11, in das mehrere Planetenräder 13 eingreifen, die andererseits mit dem Stirnrad 9 in Eingriff stehen. Die Achsen auf denen die Planetenräder 13 gelagert sind, sind fest verbunden mit dem Steg 14, der über den Antriebsstrang 2 eine der beiden Radwellen des Fahrzeuges antreibt.

Der Läufer 7, der als Kurzschlussläufer oder mit Dauermagneten versehen, ausgeführt werden kann, ist über die Welle 6 mit dem Stirnrad 10 verbunden, das ein weiteres Planetengetriebe antreibt. Dieses besteht aus dem, mit dem Gehäuse 1 verbundenen Hohlrad 12, mehreren Planetenrädern 16, Zwischenrädern 15 und dem Steg 17, der die Achsen der Planetenräder 16 und der Zwischenräder 15 trägt. Das Hohlrad 12 steht mit den Planetenrädern 16 in Eingriff. Die Zwischenräder 15 hingegen mit dem Stirnrad 10 und den Planetenrädern 16. Durch diese Anordnung wird neben der notwendigen Drehzahlverringerung auch eine Drehrichtungsumkehr zwischen der Welle 6 des Läufers 7 und der korrespondierenden, anderen Radwelle erzielt. Geeignete Wahl der Zähnezahlverhältnisse der Planetengetriebe vorausgesetzt, kann an beiden Antriebssträngen 2, 3 bzw. in weiterer Folge an den Radwellen ein ähnliches oder gleiches Drehmoment abgenommen werden, wobei die Drehbewegung der Radwellen völlig unabhängig voneinander erfolgt.

Natürlich könnte auch die Anordnung der Getriebevorrichtungen ohne Einschränkungen der Funktion vertauscht werden.

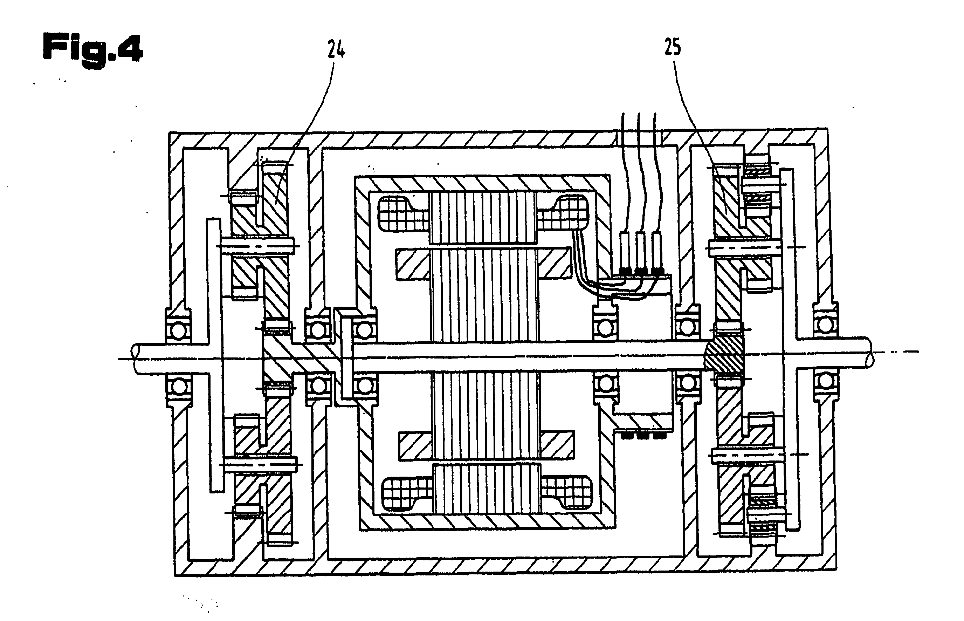

Gemäß der in Fig. 4 dargestellten Getriebeanordnung kann eine weitere Erhöhung des Übersetzungsverhältnisses erzielt werden. Der prinzipielle Aufbau des Antriebes ist äquivalent dem Antrieb in Fig. 4. Die Planetenräder 13 bzw. die Zwischenräder 15 gemäß Fig. 4 sind in der Fig. 5 als Stufenräder 24 bzw. 25 ausgeführt. Ansonsten ist gleichartige Funktionsweise gegeben. Natürlich gilt auch hier die Umkehrbarkeit der Getriebeeinrichtungen.

Der Ordnung halber sei abschließend darauf hingewiesen, dass zum besseren Verständnis des Aufbaus des Antriebes dieser bzw. dessen Bestandteile teilweise unmaßstäblich und/oder vergrößert und/oder verkleinert dargestellt wurden.

### Bezugszeichenaufstellung

- 1: Gehäuse
- 2: Antriebsstrang
- 3: Antriebsstrang
- 4: Ständer
- 5: Motorgehäuse
- 6: Welle
- 7: Läufer
- 8: Wellenstummel
- 9: Stirnrad
- 10.: Stirnrad
- 11: Hohlrad
- 12: Hohlrad
- 13: Planetenrad
- 14: Steg
- 15: Zwischenrad
- 16: Planetenrad
- 17: Steg
- 18: Wälzlager
- 19: Lager
- 20: Lager
- 21: Wälzlager
- 22: Feldwicklung
- 23: Schleifkontakt
- 24: Stufenrad
- 25: Stufenrad

## Patentansprüche

1. Elektrischer Antrieb für ein Fahrzeug, insbesondere für ein mehrspuriges Elektromobil, bei dem ein zum Fahrzeugaufbau bzw. zum Fahrzeugrahmen feststehendes Gehäuse (1) vorgesehen ist, wobei in diesem Gehäuse (1) ein Motorgehäuse (5) mit einem Ständer (4) und ein im Motorgehäuse (5) vorgesehener Läufer (7) jeweils drehbar gelagert sind und das Motorgehäuse (5) und der Läufer (7) zur Arbeitsleistung eine gegensinnige Drehbewegung ausführen, wobei ein Antriebsstrang (2 bzw. 3) mit dem Läufer (7) bzw. mit dem Motorgehäuse (5) verbunden ist und die Drehbewegung des Läufers (7) bzw. des Motorgehäuses (5) über eine Getriebeeinrichtung mit gleichsinniger An- und Abtriebsdrehrichtung und der andere Antriebsstrang (2 bzw. 3) mit dem Motorgehäuse (5) bzw. mit dem Läufer (7) verbunden ist und die Drehbewegung des Motorgehäuses (5) bzw. des Läufers (7) über eine Getriebeeinrichtung mit gegensinniger An- und Abtriebsdrehrichtung übersetzt ist und die Getriebeeinrichtungen Planetengetriebe sind, wobei der Läufer (7) über ein auf der Welle (6) angeordnetes Stirnrad (10) bzw. das Motorgehäuse (5) mit einem mit dem Motorgehäuse (5) verbundenen und auf der Motorgehäuseachse angeordneten Stirnrad (9) mit den Planetenrädern (13 bzw. 16) des zugeordneten Planetengetriebes in Eingriff steht, **dadurch gekennzeichnet, dass** Stege (14 bzw. 17), die mit den Achsen der Planetenräder (13 bzw. 16) jedes Planetengetriebes verbunden sind, vorgesehen sind, die jeweils die zugeordnete Radwelle antreiben, wobei mindestens ein Planetengetriebe zwischen den Planetenrädern (16) und dem Stirnrad (10) Zwischenräder (15), die mit dem Planetenrädem (16) und dem Stirnrad (10) kämmen, aufweist.

2. Elektrischer Antrieb nach Anspruch 1, **dadurch gekennzeichnet, dass** die Planetenräder (13 bzw. 16) und/oder die Zwischenräder (15) mindestens eines Planetengetriebes als Stufenräder (24 bzw. 25) ausgeführt sind.

## Claims

1. Electric drive for a vehicle, in particular for a multi-track electric motor vehicle, whereby a housing (1) that is stationary in relation to the vehicle chassis or frame is provided, and whereby a motor housing (5) with a stator (4) and a rotor (7), which are rotationally mounted within this motor housing (5), is provided in this housing (1), and whereby the motor housing (5) and the rotor (7) perform opposite rotational movements for output, whereby a drive train (2 or 3) is connected to the rotor (7) or to the motor housing (5) and the rotational movement of the rotor (7) or the motor housing (5) is carried out by means of a transmission device with the same drive and output direction of rotation, and whereby the remaining drive train (2 or 3) is connected to the motor housing (5) or the rotor (7) and the rotational movement of the motor housing (5) or rotor (7) is carried out by means of a transmission device with opposite drive and output direction of rotation and the transmission units are planetary gears, **characterised by** the fact that the rotor (7) engages with the planet wheels (13 or 16) of the allocated planetary gear by means of a spur pinion (10) that is arranged on the shaft (6) or the motor housing (5) engages with the planet wheels (13 or 16) of the allocated planetary gear by means of a spur pinion (9) that is connected to the motor housing (5) and is arranged on the axis of the motor housing, and that a web (14 or 17) is provided that is connected to the axles of the planet wheels (13 or 16) of each planetary gear and drives the wheel shaft assigned thereto.

2. Electric drive in accordance with Claims 1, **characterised by** the fact that the planet wheels (13, 16) and/or the idlers (15) of at least one planetary gear are embodied as stepper gears (24, 25).

## Revendications

1. Commande électrique pour un véhicule, notamment pour un véhicule automobile électrique multipiste, pour lequel est prévu un carter solide (1) par rapport à la construction et au châssis du véhicule. Dans ce carter (1), un carter moteur (5) avec un stator (4) et un rotor (7) prévu dans le carter tournent sur paliers (1). Le carter moteur (5) et le rotor (7) exécutent un mouvement rotatif en sens inverse l'un par rapport à l'autre, afin d'effectuer un travail, une chaîne cinématique (2 ou 3) étant liée au rotor (7) et/ou au carter moteur (5), et le mouvement du rotor (7) ou du carter moteur (5) étant lié par une boîte de vitesses - dont le sens de rotation est le même à l'entrée qu'à la sortie - au carter moteur (5). L'autre chaîne cinématique (2 ou 3) est lié au carter moteur (5) et au rotor (7), le mouvement rotatif du carter moteur (5) ou du rotor (7) étant transmis par une boîte de vitesses dont les sens de rotation à l'entrée et à la sortie sont opposés. Les boîtes de vitesse sont à engrenages planétaires, le rotor (7) étant engrené aux pignons (13 ou 16) de l'engrenage planétaire par un pignon (10) monté sur l'arbre (6), le carter moteur (5) étant engrené aux mêmes pignons par un pignon (9) lié au carter moteur (5) et monté sur l'axe du carter moteur. Les engrenages planétaires sont **caractérisés par** des entretoises (14 et 17) liant ces derniers aux axes des roues satellites (13 et 16), lesquels commandent chacune l'arbre de roue qui leur est attribué. Un des engrenages planétaires au moins présente des pignons intermédiaires (15) entre les roues satellites (16) et le pignon droit (10), lesquels pignons intermédiaires engrènent avec les roues satellites (16) et le pignon droit (10).

2. Commande électrique selon la revendication 1, **caractérisée par le fait que** les roues satellites (13 et 16) et/ou les pignons intermédiaires (15) d'un engrenage planétaire sont exécutés comme roues étagées (24 et 25).
